# EUROPÄISCHE PATENTANMELDUNG

(11) **EP 1 445 060 A1**
(43) Veröffentlichungstag der Anmeldung: **11.08.2004**
(21) Anmeldenummer: 03016428.9
(22) Anmeldetag: 21.07.2003
(51) Int. Cl.: B23Q 1/01, B23Q 5/34, B23Q 11/12

(54) **Antriebseinheit einer Bohrmaschine**

(30) Priorität: 10.02.2003 DE 20302053 U
(71) Anmelder: Rotwerk Elektrowerkzeuge und Handelsmarketing Beteiligungsgesellschaft mbH, 85609 Aschheim (DE)
(72) Erfinder: Dallinger, Peter.c/o Rotwerk Elektrowerkzeuge, 85609 Aschheim (DE); Frey, Dieter, 73540 Heubach (DE)
(74) Vertreter: Grünecker, Kinkeldey, Stockmair & Schwanhäusser Anwaltssozietät

(57) **Zusammenfassung**

Die vorliegende Erfindung betrifft eine Antriebseinheit einer Bohrmaschine, wobei in einem Antriebsgehäuse ein Antrieb mit wenigstens zwei Antriebsrädem (27,37) vorgesehen ist und wenigstens ein Endlostrieb (58,59) um die Antriebsräder geführt ist. Um eine derartige Antriebseinheit so zu verbessern, dass sie bei möglichst einfachem Aufbau mit geringem Platzbedarf funktionssicher arbeitet, weist das Antriebsgehäuse im Bereich wenigstens einer der Antriebsräder wenigstens eine erkerartige Ausbauchung (11,12,16,17,18) auf, die über einen Umfangsabschnitt des Antriebsrades nahe des Antriebsrades verläuft.

## Beschreibung

Die vorliegende Erfindung betrifft eine Antriebseinheit einer Bohrmaschine mit den Merkmalen des Oberbegriffes des Anspruches 1.

Aus der Praxis sind gattungsgemäße Antriebseinheiten für Bohrmaschinen bekannt, bei denen ein Riementrieb großvolumig mit einem kastenartigen Gehäuse umbaut ist. Mit der großvolumigen Umbauung ist das Gehäuse passend für verschieden ausgebildete Antriebe ausgeführt. Als ein Nebeneffekt ermöglicht die großvolumige Umbauung einen guten Luft- und Wärmeaustausch in dem Gehäuse.

Der vorliegenden Erfindung liegt die Aufgabe zugrunde, eine gattungsgemäße Antriebseinheit für Bohrmaschinen so zu verbessern, dass sie bei möglichst einfachem Aufbau mit geringem Platzbedarf funktionssicher arbeitet.

Diese Aufgabe wird erfindungsgemäße gelöst mit einer Antriebseinheit für Bohrmaschinen mit den Merkmalen des Anspruches 1.

Mit der Ausbauchung im Bereich des Antriebsrades ist das Antriebsgehäuse in diesem Bereich volumenreduziert ausführbar. Gleichzeitig ist zwischen Antriebsrad und Ausbauchung ein Luftkanal gebildet. Aufgrund der Bewegung des Antriebsrades und des Endlostriebes strömt Luft in diesen Luftkanal ein, so dass ein Luftdurchsatz durch diesen Kanal entsteht. Der intensive Luftdurchsatz sorgt für ein Kühlen von Antriebsrad und Endlostrieb und für einen Luft- und Wärmeaustausch in dem Gehäuse.

In einer besonders bevorzugten Ausführungsform der Erfindung kann an beiden Längsseiten des Antriebsgehäuses wenigstens eine Ausbauchung vorgesehen sein. Hierdurch kann das Antriebsgehäuse an beiden Längsseiten im Bereich der Ausbauchungen jeweils volumenreduziert ausgebildet werden. Durch die beiden Ausbauchungen werden sich in ihrer Wirkung ergänzende Luftkanäle ausgebildet, so dass die durch beide Ausbauchungen bewirkte Kühlwirkung größer ist als die von einer dieser Ausbauchungen einzeln bewirkte Kühlwirkung.
In einer besonders günstigen Ausführungsform der Erfindung verläuft die Ausbauchung etwa bogenförmig nahe des Antriebsrades. Ein bogenförmiges Ausbilden der Ausbauchung ermöglicht ein gutes Annähern der Ausbauchung insgesamt an das Antriebsrad. Ferner ist der Widerstand für ein Durchströmen des durch die Ausbauchung mitgebildeten Luftkanals durch das runde Ausbilden verringert.

In einer Weiterbildung der Erfindung kann die erkerartige Ausbauchung in ihrem Verlauf nahe des Antriebsrades bereichsweise enger sein und sich wenigstens zu einer Gehäusemitte hin trichterartig zu dem Antriebsrad beabstandend erstrecken. Hierdurch wird der Luftkanal mit Hilfe der Ausbauchung sich zur Gehäusemitte hin trichterartig öffnend ausgebildet. Dies begünstigt ein Einströmen von Luft in den Luftkanal, was zu einem erhöhten Luftdurchsatz führt. Im umgekehrten Fall wird ein Ausströmen von Luft diffusorartig begünstigt, was ebenfalls zu einem erhöhten Luftdurchsatz führt.

Günstigerweise kann ein Innenradius der erkerartigen Ausbauchung größer als ein Außenradius des Antriebsrades und exzentrisch zu diesem sein. Damit wird der durch die Ausbauchung mitgebildete Luftkanal trichterartig ausgebildet. Ein trichteröffnungsseitiges Einströmen von Luft wird begünstigt, was zu einem erhöhten Luftdurchsatz führt. Umgekehrt wird durch diese Bauweise auch ein trichteröffnungsseitiges Ausströmen von Luft diffusorartig begünstigt, was ebenfalls zu einem erhöhten Luftdurchsatz führt. Durch das kreisbogenartige Ausbilden der Ausbauchung ist diese besonders einfach herstellbar. Zudem ergeben sich günstige Luftwiderstände für den mit der Ausbauchung gebildeten Luftkanal.

Bevorzugt verläuft die erkerartige Ausbildung in einem Abstand zwischen 5 und 65 mm, vorzugsweise zwischen 8 und 28 mm, von dem Antriebsrad beabstandet. Bei diesen Abstandsbereichen ist die Ausbauchung einerseits, zum volumenreduzierten Ausbilden des Antriebsgehäuses in diesem Bereich, eng an das Antriebsrad herangeführt ausbildbar. Andererseits ergeben sich günstige Querschnittsverhältnisse für den mit der Ausbauchung gebildeten Luftkanal.

In einer besonders bevorzugten Ausführungsform der Erfindung verläuft die erkerartige Ausbauchung an einem Umfangsbereich zwischen 30° und 130°, vorzugsweise 90°, des Antriebsrades nahe diesem. In diesen Winkelbereichen ergibt sich im Bereich der Ausbauchung ein deutlich volumenreduziertes Antriebsgehäuse das nahe an das an das Antriebsrad herangeführt ausbildbar ist. Ferner wird mit derartigen Ausbauchungen ein Luftkanal mit hinreichender Länge ausgebildet.

In einer besonders bevorzugten Weiterbildung der Erfindung kann die Ausbauchung an einer Ober- und/oder einer Unterseite einen dachartigen Übergangsbereich aufweisen, der einen Übergang zwischen einem sich entlang des Umfanges des Antriebsrades erstreckenden äußeren Bereich der Ausbauchung und dem an die Ausbauchung angrenzenden Bereich des Antriebsgehäuses herstellt. Die Ausbauchung ist mit einem Übergang an der Ober- und/oder Unterseite einfacher und kostengünstiger ausführbar. Darüber hinaus ergibt sich ein vergrößerter Querschnitt des mit Hilfe der Ausbauchung gebildeten Luftkanales, was einen entsprechend höheren Luftdurchsatz zulässt.

Besonders bevorzugt kann der Übergangsabschnitt wenigstens abschnittsweise kegelmantelartig ausgebildet sein. Mit dieser Form ist der Übergangsabschnitt besonders einfach herstellbar. Ferner wird ein Strömungswiderstand in diesem Bereich des mit der Ausbauchung gebildeten Strömungskanales gering gehalten.

Günstigerweise kann das Antriebsgehäuse wenigstens abschnittsweise geteilt sein, wobei im Bereich der Ausbauchung die Teilung oberhalb des Übergangsbereiches der Unterseite der Ausbauchung vorgesehen ist. Hierdurch ist das Antriebsgehäuse unter Berücksichtigung seines durch die Ausbauchung gegebenen Hinterschnitts behinderungsfrei öffenbar.

In einer günstigen Weiterbildung der Erfindung kann ein Oberteil des Antriebsgehäuses zu einer Stirnseite des Antriebsgehäuses schwenkbar sein. Hierdurch ist das Antriebsgehäuse unter Berücksichtigung seiner durch das Vorsehen der Ausbauchung hinterschnitten Form besonders einfach öffenbar.

Vorteilhafterweise kann an einer Gehäuseinnenseite der erkerartigen Ausbauchung ein rippenartiges Profil vorgesehen sein. Dieses rippenartige Profil verstärkt die Ausbauchung gegenüber mechanischen Belastungen und sorgt darüber hinaus für ein zusätzliches Verwirbeln der Luft, die durch den mit der Ausbauchung gebildeten Luftkanal strömt.

Für eine Bohrmaschine mit einer Antriebseinheit nach wenigstens einem der Ansprüche 1 bis 12 wird separater Schutz beansprucht.

Eine Ausführungsform der Erfindung ist in der Zeichnung dargestellt. Es zeigen:
- Figur 1: eine Ansicht auf eine Seite einer Bohrmaschine mit erfindungsgemäßer Antriebseinheit,
- Figur 2: eine Ansicht auf eine Vorderseite der erfindungsgemäßen Antriebseinheit aus Figur 1,
- Figur 3: eine schematische Ansicht auf eine obere Seite der Antriebseinheit aus Figur 2 in freigeschnittenem Zustand und
- Figur 4: ein vergrößerter Ausschnitt der schematischen Darstellung aus Figur 3.

Im Folgenden werden für gleiche Elemente stets gleiche Bezugszeichen verwendet. Um Wiederholungen zu vermeiden, wird auf bereits erfolgte oder noch folgende Erläuterungen zu den jeweiligen Elementen verwiesen.

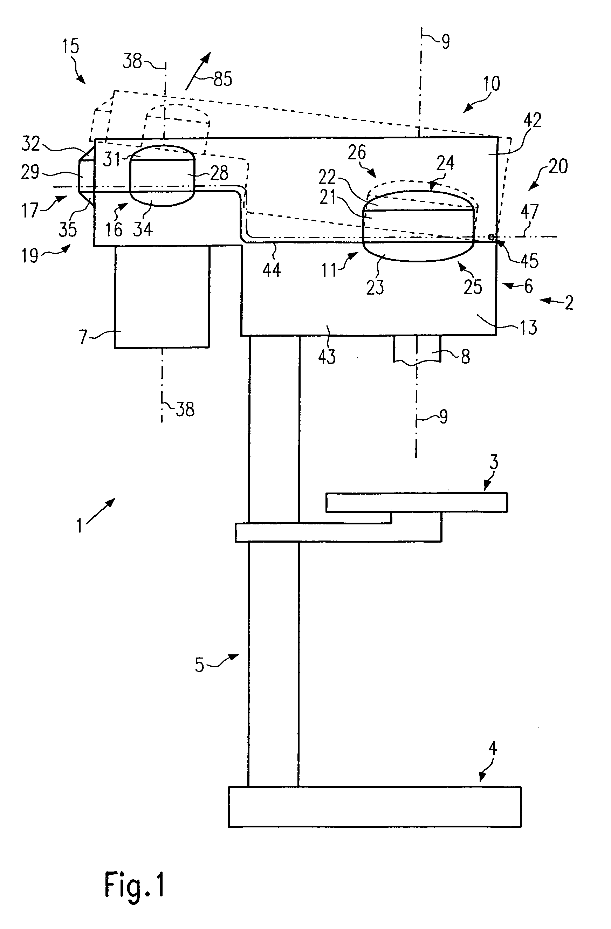

Figur 1 zeigt eine Bohrmaschine 1 mit erfindungsgemäßer Antriebseinheit 2, Arbeitstisch 3, Fuß 4 und Stehsäule 5. Die Antriebseinheit 2 weist ein Antriebsgehäuse 6, einen Motor 7 und eine Arbeitsspindel 8 auf, die um eine Drehachse 9 drehbar ist.

Das Antriebsgehäuse 6 hat in einem vorderen Abschnitt 10 zwei spiegelbildlich ausgebildete erste und zweite erkerartige Ausbauchungen 11, 12. In der Darstellung von Figur 1 ist nur die an einer ersten Längsseite 13 vorgesehene erste erkerartige Ausbauchung 11 gezeigt. An einem hinteren Abschnitt 15 des Antriebsgehäuses 6 sind eine dritte, vierte und fünfte erkerartige Ausbauchung 16, 17, 18 vorgesehen. In der Darstellung von Figur 1 sind nur die an der ersten Längsseite 13 vorgesehene dritte, erkerartige Ausbauchung 16 und die an einer hinteren Stirnseite 19 vorgesehene vierte, erkerartige Ausbauchung 17 gezeigt.

Die erste erkerartige Ausbauchung 11 weist einen äußeren Bereich 21 auf, an den sich an einer Oberseite 24 der Ausbauchungen 11 ein oberer dachartiger Übergangsbereich 22 anschließt und an einer Unterseite 25 der Ausbauchung 11 ein unterer dachartiger Übergangsbereich 23. Die dachartigen Übergangsbereiche 22, 23 bilden jeweils einen Übergang von dem äußeren Bereich 21 und einen an die Ausbauchung 11 angrenzenden Bereich 26 des Antriebsgehäuses 6. Die Übergangsbereiche 22, 23 sind im Wesentlichen wie ein Teil eines Kegelmantels ausgebildet.

Insbesondere der äußere Bereich 21 der Ausbauchung 11 erstreckt sich etwa bogenförmig etwa entlang eines Umfanges eines innerhalb des Antriebsgehäuses 6 vorgesehenen ersten Antriebsrades. Das erste Antriebsrad und die Arbeitsspindel 8 sind gemeinsam um die erste Drehachse 9 drehbar.

Wahlweise kann die bogenförmige Ausbildung des äußeren Bereiches der ersten Ausbauchung 11 auch eckig bogenförmig sein. Die dachartigen Übergangsbereiche 22, 23 der ersten Ausbauchung 11 sind dann entsprechend eckig etwa wie ein Teil einer Kegelmantelfläche ausgeformt.

Die zweiten, dritten und vierten erkerartigen Ausbauchungen sind analog zu den ersten und zweiten Ausbauchungen 11, 12 ausgebildet und weisen dementsprechend jeweils einen äußeren Bereich 28, 29, 30, einen oberen dachartigen Übergangsbereich 31, 32, 33 und einen unteren dachartigen Übergangsbereich 34, 35, 36 auf. Die dritte, vierte und fünfte Ausbauchung 16, 17, 18 erstrecken sich jeweils etwa entlang eines Umfanges eines in dem Arbeitsgehäuse 6 vorgesehenen zweiten Antriebrades. Das zweite Antriebsrad und der Motor 7 haben eine gemeinsame zweite Drehachse 38. Das zweite Antriebsrad hat einen kleineren Durchmesser als das erste Antriebsrad. Die dritte erkerartige Ausbauchung 16 ist spiegelbildlich zu der fünften erkerartigen Ausbauchung 18 ausgebildet.

Die dritte, vierte und fünfte Ausbauchung 16, 17, 18 sind jeweils weniger breit bezüglich einer Richtung quer zu der zweiten Drehachse 38 als die erste und zweite Ausbauchung 11,12 bezüglich einer Richtung quer zu der ersten Drehachse 9. Bezüglich einer Richtung längs zu der zweiten Drehachse 38, ist der äußere Bereich 28, 29, 30 der ersten, vierten und fünften Ausbauchung 16, 17, 18 höher als die äußeren Bereiche 21, 39 der dritten und zweiten Ausbauchung 11,12 bezüglich einer Richtung längs zu der ersten Drehachse 9.

Das Antriebsgehäuse 6 weist ein erstes Gehäuseteil 42 und ein zweites Gehäuseteil 43 auf. Die Teilung zwischen dem ersten und zweiten Gehäuseteil 42, 43 erfolgt im Bereich der Ausbauchungen 11, 12, 16, 17, 18 jeweils oberhalb des unteren dachartigen Übergangsbereiches 23, 41, 34, 35, 36. Die Teilung verläuft entlang der in Figur 1 gezeigten Linie 44. Die Teilungslinie 44 läuft um das gesamte Antriebsgehäuse 6 um.

Durch die Teilung des Antriebsgehäuses 6 ist das erste Gehäuseteil 42 von dem zweiten Gehäuseteil 43 abnehmbar, wobei das erste Gehäuseteil 42 behinderungsfrei an den ersten und zweiten Antriebsrädern 27, 37 vorbeigeführt wird. In dieser Ausführungsform der Erfindung weist das Antriebsgehäuse 6 Gelenkelemente 45 auf, die an einer vorderen Stirnseite 20 vorgesehen sind. Die Gelenkelemente 45 ermöglichen ein Schwenken des ersten Gehäuseteiles 42 in Pfeilrichtung 85 zu der vorderen Stirnseite 20 hin. Dabei sind die Gelenkelemente 45 nahe der Teilungslinie 44 vorgesehen, das erste und zweite Gehäuseteil 42, 43 gelenkig miteinander verbindend.

Wahlweise können die Gelenkelemente auch an einer hinteren Stirnseite 19 des Arbeitsgehäuses 6 vorgesehen sein, um ein Schwenken des ersten Gehäuseteiles 42 zu der hinteren Stirnseite 19 hin zu ermöglichen.

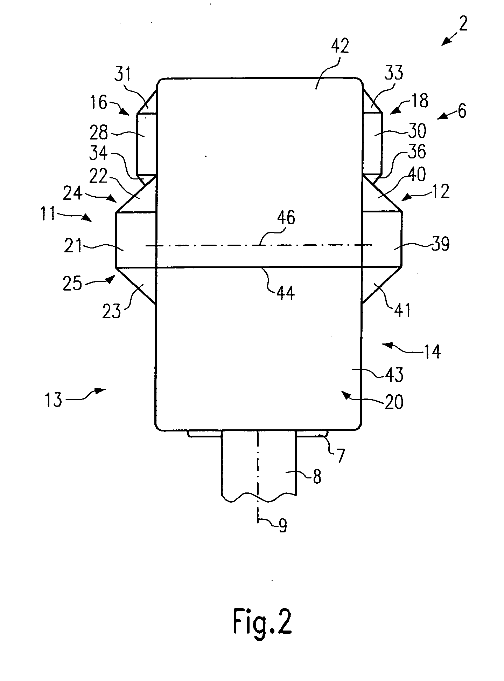

In Figur 2 ist die erfindungsgemäße Antriebseinheit 2 in einer Vorderansicht gezeigt. Insbesondere sind hier die Form der oberen und unteren dachartigen Übergangsbereiche 22, 40, 31, 33, 23, 41, 34, 36 der ersten, zweiten, dritten und fünften Ausbauchung 11, 12, 16, 18, sowie deren äußerer Bereich 21, 39, 28, 30 ersichtlich. Ferner ist in der Darstellung von Figur 2 zu erkennen, dass die dritte und fünfte Ausbauchung 16, 18 weniger weit von der jeweiligen Längsseite 13, 14 des Antriebsgehäuse 6 vorstehen als die erste und zweite Ausbauchung 11, 12.

In Figur 2 ist eine horizontale Schwenkachse 46 gezeigt, um die die Gelenkelemente 45 das Schwenken des ersten Gehäuseteiles 42 zu der vorderen Stirnseite 20 hin ermöglichen.

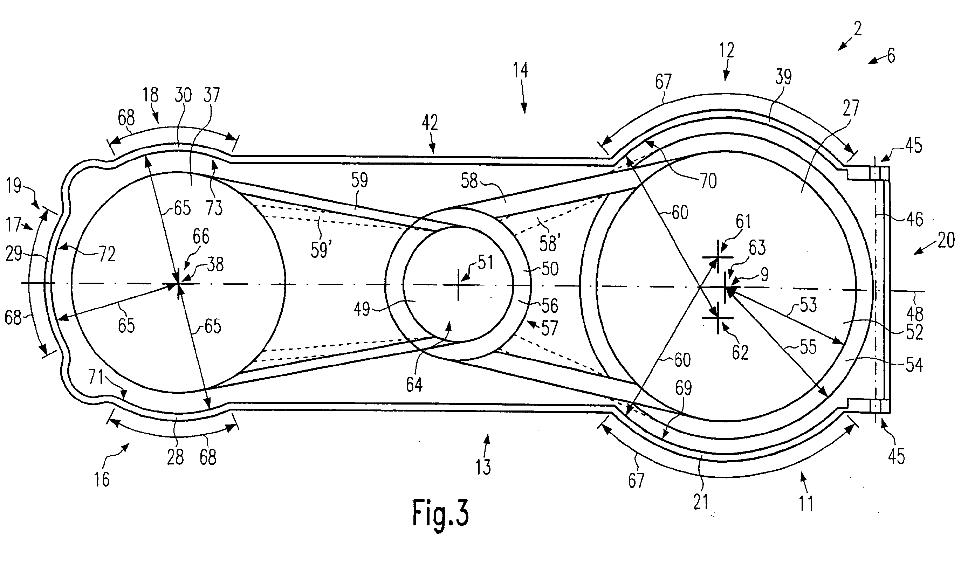

Figur 3 zeigt eine schematische Draufsicht auf die erfindungsgemäße Antriebseinheit, wobei ein Teil des ersten Gehäuseteiles 42 entlang einer in Figur 1 gezeigten Schnittlinie 47 abgeschnitten wurde.

Die Ausbildung der Antriebseinheit ist gemäß der in Figur 3 dargestellten schematischen Ansicht spiegelsymmetrisch zu einer Längsachse 48 der Antriebseinheit 2. In der Antriebseinheit sind das erste Antriebsrad 27, das zweite Antriebsrad 37 und dritte und vierte Antriebsräder 49, 50 vorgesehen, durch deren Drehachsen 9, 38, 51 die Längsachse 48 verläuft. Das dritte und vierte Antriebsrad 49, 50 sind auf einer Welle mit der dritten Drehachse 51 vorgesehen und in einer Position zwischen dem ersten und zweiten Antriebsrad 27, 37, etwa mittig in dem Antriebsgehäuse 6 angeordnet.

Das erste Antriebsrad 27 weist einen kleinen Antriebsteil 52 mit einem kleinen Radius 53 und einen großen Antriebsteil 54 mit einem großen Radius 55 auf. Das vierte Antriebsrad 50 weist ebenfalls einen großen Antriebsteil 56 und einen kleinen Antriebsteil 57 auf, wobei in der Darstellung von Figur 3 der kleine Antriebsteil 57 durch den großen Antriebsteil 56 verdeckt ist.

Über das erste Antriebsrad 27 und das vierte Antriebsrad 50 ist ein erster Endlostrieb 58 geführt. Gemäß der Darstellung von Figur 3 läuft der erste Endlostrieb 58 um den großen Antriebsteil 56 des vierten Antriebsrades 50 und den kleinen Antriebsteil 52 des ersten Antriebsrades 27 um. Alternativ kann der erste Endlostrieb 58' auch um den kleinen Antriebsteil 57 des vierten Antriebsrades 50 und den großen Antriebsteil 54 des ersten Antriebsrades 27 umlaufen, wie dies in gestrichelten Linien dargestellt ist.

Das zweite Antriebsrad 37 und das dritte Antriebsrad 49 sind jeweils verstellbare Antriebsräder, um die ein zweiter Endlostrieb 59 geführt ist. Sowohl das zweite als auch das dritte Antriebsrad 27, 59 können den Durchmesser verstellen, über den der zweite Endlostrieb 59 jeweils umläuft. In ausgezogenen Linien ist der zweite Endlostrieb 59 bei einer ersten Durchmesserkombination des zweiten und dritten Antriebsrades 27, 59 gezeigt. In gestrichelten Linien ist der zweite Endlostrieb 59' gemäß einer zweiten Durchmesserkombination des zweiten und dritten Antriebsrades 37, 49 dargestellt.

In der vorliegenden Ausführungsform der Erfindung sind die Antriebsräder Riemenscheiben und die Endlostriebe Riemen. Alternativ können, auch teilweise, Ketten und Kettenräder verwendet werden. Ebenso ist es denkbar, die Antriebsräder und die Endlostriebe jeweils als Zahnräder auszuführen.

Die äußeren Bereiche 21, 39 der ersten und zweiten Ausbauchung 11, 12 sind über einen Umfangsabschnitt des ersten Antriebsrades 27 nahe diesem Antriebsrad 27 verlaufend ausgebildet. Analog sind die äußeren Bereiche 28, 29, 30 der dritten bis fünften Ausbauchungen 16, 17, 18 über einen Umfangsabschnitt des zweiten Antriebsrades 37 nahe diesem Antriebsrad 37 verlaufend ausgebildet.

Die äußeren Bereiche 21, 39 der ersten und zweiten Ausbauchungen 11, 12 sind bogenförmig jeweils mit einem ersten Radius 60 ausgebildet. Die Mittelpunkte 61, 62 der Radien 60 der äußeren Bereiche 21, 39 sind jeweils spiegelbildlich exzentrisch zu einem ersten Mittelpunkt 63 des ersten Antriebsrades 27 positioniert. Dementsprechend ist der Verlauf der ersten und zweiten Ausbauchungen 11, 12 jeweils bereichsweise enger und sich zu einer Gehäusemitte 64 hin zu dem ersten Antriebsrad 27 trichterartig weiter beabstandend erstreckend ausgebildet. Die ersten Radien 60 dieser äußeren Bereiche 21, 39 sind größer als der große Radius 55 des ersten Antriebsrades 27.

Die äußeren Bereiche 28, 29, 30 der dritten, vierten und fünften Ausbauchung 16, 17, 18 sind mit jeweils gleichgroßen zweiten Radien 65 ausgebildet. Der Mittelpunkt der zweiten Radien entspricht einem zweiten Mittelpunkt 66 des zweiten Antriebsrades 37. Dementsprechend verlaufen diese äußeren Bereiche 28, 29, 30 konstant zu dem zweiten Antriebsrad 37 beabstandet.

Alternativ können die äußeren Bereiche 21 und 39, sowie die äußeren Bereiche 28, 29, 30 mit jeweils verschiedenen Radien ausgebildet sein.

Der Umfangsbereich, über den sich die Ausbauchungen 21, 39, 28, 29, 30 entlang dem jeweiligen Antriebsrades 27, 37 erstrecken, kann im Bereich zwischen 30° und 130° bezüglich des Mittelpunktes 63, 66 des jeweiligen Antriebsrades 27, 37 liegen. Im vorliegenden Ausführungsbeispiel erstrecken sich die Umfangsbereiche 67 der ersten und zweiten Ausbauchung 11,12 über einen Bereich von etwa 90° bezüglich des ersten Mittelpunktes 63 des ersten Antriebsrades 27. Die Umfangsbereiche 68 der dritten, vierten und fünften Ausbauchung 16, 17, 18 erstrecken sich jeweils über einen Bereich von etwa 55° bezüglich des zweiten Mittelpunktes 66 des zweiten Antriebsrades 37.

Der Abstand zwischen einer jeweiligen inneren Umfangsfläche 69, 70, 71, 72, 73 der Ausbauchungen 11, 12, 16, 17, 18 und dem jeweils zugeordneten Antriebsrad 27, 37 kann einen Wert im Bereich von 5 bis 65 mm annehmen, vorzugsweise 8 bis 28 mm. Insbesondere können kleinere Abstandswerte zwischen dem großen Antriebsteil 54 des ersten Antriebsrades 27 und den ersten und zweiten Ausbauchungen 11,12 vorgesehen sein, sowie größere Abstandswerte zwischen dem kleineren Antriebsteil 52 des ersten Antriebsrades 27 und den ersten und zweiten Ausbauchungen 11,12.

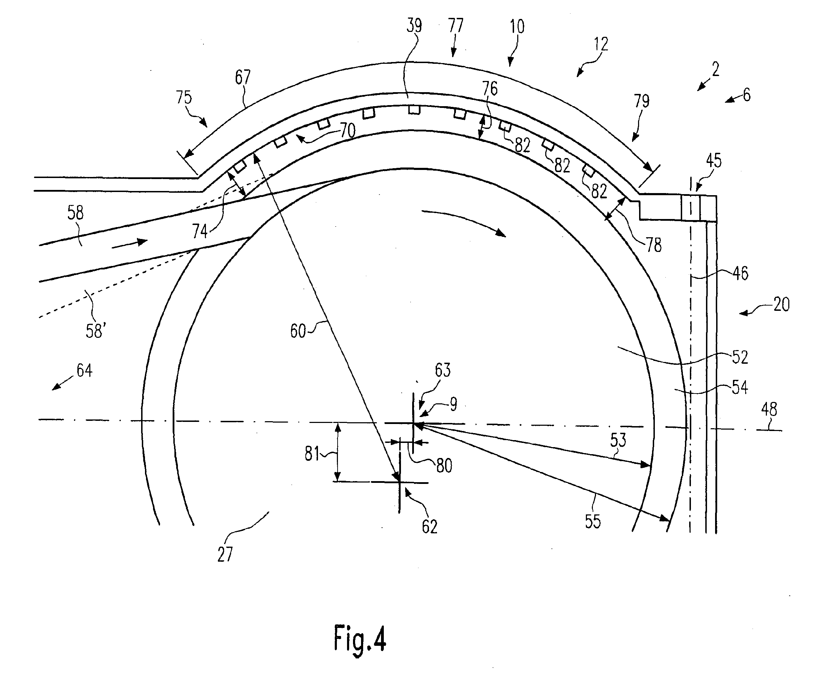

In Figur 4 ist ein Teil des vorderen Abschnittes 10 der in Figur 3 dargestellten Antriebseinheit 2 vergrößert dargestellt. Hier ist besonders gut die Beabstandung der zweiten Ausbauchung 12 gegenüber dem ersten Antriebsrad 27 erkennbar, die bereichsweise enger ist und sich zu der Gehäusemitte 64 hin trichterartig von dem Antriebsrad 27 beabstandend verläuft. Ein Abstand 74 zwischen der Innenoberfläche 70 der zweiten Ausbauchung 12 und dem ersten Antriebsrad 27 ist am Ende eines gehäusemittenseitigen Bereiches 75 der zweiten Ausbauchung 12 am größten. Bei der vorliegenden Ausführungsform hat der dortige Abstand 74 einen Wert von etwa 16 mm. Ein Abstand 76 zwischen der Innenoberfläche 70 und dem ersten Antriebsrad 27 ist in einem Mittenbereich 77 der zweiten Ausbauchung 12 am geringsten. In der vorliegenden Ausführungsform hat dieser Abstand 76 einen Wert von etwa 10 mm. Ein Abstand 78 am Ende eines stirnseitigen Bereiches 79 der zweiten Ausbauchung 12 ist größer als der Abstand 76 im Mittenbereich 77.

Der beschriebene Verlauf des Abstandes zwischen zweiter Ausbauchung 12 und erstem Antriebsrad 27 ist durch die Exzentrizität des Mittelpunktes 62 des Radius 60 der zweiten Ausbauchung zu dem Mittelpunkt des Radius des ersten Antriebsrades 27 bedingt. Ein Längswert 80 der Exzentrizität in Längsrichtung zu der Längsachse 48 ist dabei kleiner als ein Querwert 81 der Exzentrizität quer zur Längsachse 48. Der Längswert 80 kann bei der vorliegenden Ausführungsform Werte bis etwa 10 mm haben, vorzugsweise einen Wert von etwa 5 mm. Der Querwert 81 kann Werte zwischen etwa 15 und 25 mm annehmen, vorzugsweise einen Wert von etwa 20 mm.

An der Innenoberfläche 70 der zweiten Ausbauchung 12 ist ein rippenartiges Profil mit einer Anzahl von Rippen 82 ausgebildet. Die Rippen 82 sind aus Gründen der Übersichtlichkeit in Figur 3 nicht dargestellt.

Wegen der spiegelbildlichen Ausbildung der Ausbauchung 11 zur zweiten Ausbauchung 12, treffen die obigen Ausführungen analog auf die erste Ausbauchung 11 zu.

Im Folgenden wird die Funktionsweise der vorliegenden Ausführungsform beschrieben.

Durch das Vorsehen der erkerartigen Ausbauchungen kann das Antriebsgehäuse 6 im Bereich der ersten und zweiten Antriebsräder 27, 37 besonders raumsparend ausgebildet werden. Ferner werden mit den Ausbauchungen Luftkanäle zwischen der jeweiligen Ausbauchung und dem jeweiligen Antriebsrad ausgebildet. Durch das Drehen der Antriebsräder 27, 37 und das Bewegen der Endlostriebe 58, 58', 59, 59' wird die Luft mitgerissen und durch die Luftkanäle bewegt. Die entsprechend intensive Luftströmung in dem um die Antriebsräder 27, 37 eng umbauten Raum wirkt kühlend auf die Antriebsräder 27, 37 und Endlostriebe 58, 58', 59, 59'.

Gemäß der Form der Ausbauchungen sind die Luftkanäle bogenförmig nahe den Antriebsrädern 27, 37 ausgebildet. Hierdurch wird der Luftstrom jeweils nahe den Antriebsrädern 27, 37 und mit einer Geschwindigkeit geführt, die der jeweiligen Umfangsgeschwindigkeit der Antriebsräder 27, 37 nahe kommt.

Mit Hilfe der ersten, zweiten, dritten und fünften Ausbauchung 11, 12, 16, 18 wird durch deren Öffnung zu der Gehäusemitte 64 hin ein etwa kreuzweises Durchströmen des Antriebsgehäuses 6 bewirkt. Hierdurch ist der Luftaustausch besonders intensiv.

Durch das trichterartige Beabstanden der ersten und zweiten Ausbauchungen 11, 12 zu dem ersten Antriebsrad 27, wird ein besonders starker Luftstrom durch die mit den ersten und zweiten Ausbauchungen 11,12 gebildeten Luftkanäle realisiert. Gemäß der in Figur 4 angegebenen Laufrichtung 83 des ersten Endlostriebes 58 und der entsprechenden Drehrichtung 84 des ersten Antriebsrades 27, wird die Luft im gehäusemittenseitigen Bereich 75 besonders gut angesaugt zum Mittenbereich 77 verdichtet und beschleunigt durchgeleitet. Der Luftaustritt erfolgt im spiegelbildlich mit der ersten Ausbauchung 11 ausgebildeten Luftkanal beschleunigt. Die trichterförmige Öffnung des Luftkanals zu der Gehäusemitte 64 hin wirkt als Diffusor.

Die an den Innenwänden 69, 70 der ersten und zweiten Ausbauchung 11,12 vorgesehenen Rippen 82 sorgen für ein Verwirbeln der Luft in dem jeweiligen Luftkanal. Hierdurch wird der Kühleffekt der durchströmenden Luft weiter erhöht.

## Patentansprüche

1. Antriebseinheit (2) einer Bohrmaschine (1), wobei in einem Antriebsgehäuse (6) ein Antrieb mit wenigstens zwei Antriebsrädern (27, 37) vorgesehen ist und wenigstens ein Endlostrieb (58, 59) um die Antriebsräder geführt ist,
**dadurch gekennzeichnet,**
**dass** das Antriebsgehäuse im Bereich wenigstens einer der Antriebsräder wenigstens eine erkerartige Ausbauchung (11, 12, 16, 17, 18) aufweist, die über einen Umfangsabschnitt (67, 68) des Antriebsrades nahe des Antriebsrades verläuft.

2. Antriebseinheit nach Anspruch 1,
**dadurch gekennzeichnet,**
**dass** an beiden Längsseiten (13, 14) das Antriebsgehäuse (6) wenigstens eine Ausbauchung (11, 12, 16, 18) vorgesehen ist.

3. Antriebseinheit nach einem der Ansprüche 1 oder 2,
**dadurch gekennzeichnet,**
**dass** die Ausbauchung (11, 12, 16, 17, 18) etwa bogenförmig nahe des Antriebsrades (27, 37) verläuft.

4. Antriebseinheit nach wenigstens einem der vorhergehenden Ansprüche,
**dadurch gekennzeichnet,**
**dass** die erkerartige Ausbauchung (11, 12, 16, 17, 18) in ihrem Verlauf nahe des Antriebsrades (27, 37) bereichsweise enger ist und sich wenigstens zu einer Gehäusemitte (64) hin trichterartig zu dem Antriebsrad beabstandend erstreckt.

5. Antriebseinheit nach wenigstens einem der vorhergehenden Ansprüche,
**dadurch gekennzeichnet,**
**dass** ein Innenradius (60) der erkerartigen Ausbauchung (11, 12) größer als ein Außenradius (55) des Antriebsrades (27) und exzentrisch zu diesem ist.

6. Antriebseinheit nach wenigstens einem der vorhergehenden Ansprüche,
**dadurch gekennzeichnet,**
**dass** die erkerartige Ausbauchung (11, 12, 16, 17, 18) in einem Abstand zwischen 5 mm und 65 mm, vorzugsweise zwischen 8 mm und 28 mm, von dem Antriebsrad (27, 37) beabstandet verläuft.

7. Antriebseinheit nach wenigstens einem der vorhergehenden Ansprüche,
**dadurch gekennzeichnet,**
**dass** die erkerartige Ausbauchung (11, 12, 16, 17, 18) an einem Umfangsbereich (67, 68) zwischen 30° und 130°, vorzugsweise etwa 90°, des Antriebsrades (27, 37) nahe diesem verläuft.

8. Antriebseinheit nach wenigstens einem der vorhergehenden Ansprüche,
**dadurch gekennzeichnet,**
**dass** die Ausbauchung (11) an einer Ober- und/oder einer Unterseite (24, 25) einen dachartigen Übergangsbereich (22, 23) aufweist, der einen Übergang zwischen einem sich entlang des Umfanges des Antriebsrades (27) erstreckenden äußeren Bereich (21) der Ausbauchung (11) und dem an die Ausbauchung angrenzenden Bereich (26) des Antriebsgehäuses (6) herstellt.

9. Antriebseinrichtung nach Anspruch 8,
**dadurch gekennzeichnet,**
**dass** der Übergangsbereich (22, 23) wenigstens abschnittsweise kegelmantelartig ausgebildet ist.

10. Antriebseinrichtung nach einem der Ansprüche 8 oder 9,
**dadurch gekennzeichnet,**
**dass** das Antriebsgehäuse (6) wenigstens abschnittsweise geteilt ist, wobei im Bereich der Ausbauchung (11) die Teilung oberhalb des Übergangsbereiches (23) der Unterseite (25) der Ausbauchung (11) vorgesehen ist.

11. Antriebseinheit nach wenigstens einem der vorhergehenden Ansprüche,
**dadurch gekennzeichnet,**
**dass** ein Oberteil (42) des Antriebsgehäuses (6) zu einer Stirnseite (20) des Antriebsgehäuses schwenkbar ist.

12. Antriebseinheit nach wenigstens einem der vorhergehenden Ansprüche,
**dadurch gekennzeichnet,**
**dass** an einer Gehäuseinnenseite (70) der erkerartigen Ausbauchung (11) ein rippenartiges Profil (82) vorgesehen ist.

13. Bohrmaschine (1) mit einer Antriebseinheit (2) nach wenigstens einem der vorhergehenden Ansprüche.
